# EUROPEAN PATENT APPLICATION

(11) **EP 1 844 728 A1**
(43) Date of publication of application: **17.10.2007**
(21) Application number: 07250989.6
(22) Date of filing: 09.03.2007
(51) Int. Cl.: A61C 5/14

(54) **Cheek and lip retractor for dentistry**

(30) Priority: 13.04.2006 US 744808 P; 27.06.2006 US 426784
(71) Applicant: KerrHawe SA, 6934 Bioggio (CH)
(72) Inventor: Kilcher, Beat, 6935 Bosco Luganese (CH); Quarry, Antony, 6987 Caslano (CH)
(74) Representative: Findlay, Alice Rosemary

(57) **Abstract**

A cheek and lip retractor (30) for dentistry comprises respective cheek portions (36, 38) and lip portions for the upper and lower lips. In one embodiment, the lip portions each comprise a lip shield (32, 34) and mucosa pads (40a, 40b, 42a, 42b) that are separate and spaced apart from the lip shield (32, 34). The lip shield (32, 34) includes a first side edge (82) that is disposed within a patient's mouth, and a second side edge (84) that is disposed outside the patient's mouth, when the retractor (30) is used to separate the lips of the patient. The cheek portions (36, 38) and lip portions are connected to each other by flexible connecting elements (44, 46, 48, 50) and the connecting elements (44, 46, 48, 50) are disposed between the lip shields (32, 34) and the mucosa pads (40a, 40b, 42a, 42b). In another embodiment, the cheek portions (36, 38) of the retractor (30) include first side edges (90) disposed within a patient's mouth, and second side edges (92) disposed outside the patient's mouth during use to separate the lips of the patient.

## Description

The present invention relates to a cheek and lip retractor for dentistry, intended for retracting the soft tissue in the area of the operating field during treatments in the oral cavity and more particularly on the teeth.

A large number of cheek and lip retractors are known in the art, e.g. from U.S. Pat. No. 4,053,984, the retractor disclosed in this reference essentially consisting of a U-shaped bent piece both ends of which are provided with lip shields while the cheeks are pulled out by the U's legs. Through this arrangement, in the area of the mouth corners, the lips are seized as by a rigid hook, thereby making it impossible for the operator to further stretch the mouth corner if necessary. Moreover, the access to the adjacent gingival tissue is insufficient.

Still other retractors are known in the art, which also suffer from the mentioned drawbacks, and where the lip tension resulting from the extension of the lips in the horizontal direction is so strong that it may be uncomfortable for the patient and painful after a time. Also, the retractors of the prior art do not offer sufficient access to the treated surfaces in the area of the front teeth.

A cheek and lip retractor of the present invention in one aspect comprises respective cheek portions and lip portions for the upper and lower lip, said lip portions comprising a lip shield and mucosa pads which are separate and spaced apart from said lip shield, said cheek portions and lip portions being connected to each other by flexible connecting elements, and said connecting elements being disposed between said lip shield and said mucosa pad.

The present invention at least in the preferred embodiments provides a cheek and lip retractor that allows the lips to spread in such a manner as to ensure a free access to the areas to be treated, and which is so designed that even a prolonged application of the retractor is not uncomfortable or even painful for the patient.

The invention will now be further described by way of example with reference to the accompanying drawings in which:

FIG. 1 shows a first embodiment of a cheek and lip retractor in accordance with the present invention, in rear view;

FIG. 2 shows the retractor of FIG. 1 in side view;

FIG. 3 shows a detail on an enlarged scale;

FIG. 4 shows the retractor of FIG. 1 in front view;

FIG. 5 is a perspective view of a second embodiment of a cheek and lip retractor in accordance with the present invention;

FIG. 6 is a side elevation view of the retractor of FIG. 5;

FIG. 7 is a front elevation of the retractor of FIG. 5 in a person's mouth;

FIG. 8 is an enlarged detail of FIG. 7; and

FIG. 9 is a perspective view of the retractor of FIG. 5, in a person's mouth.

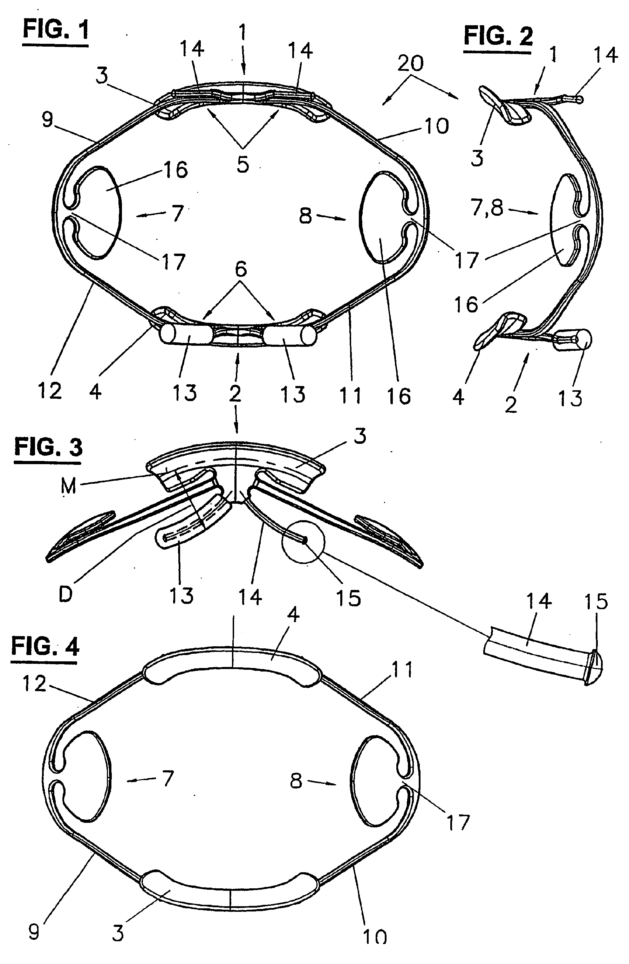

FIG. 1 shows retractor 20 in rear view with the two lip portions 1 and 2, each provided with respective lip shields 3, 4 and mucosa pads 5, 6, as well as the two cheek portions 7 and 8. The lip and cheek portions are arranged in a slightly curved plane and are connected to each other by flexible connecting elements 9, 10, 11, and 12.

As appears in FIG. 3, the mucosa pads comprise respective pairs of rolls 13 that may e.g. be made of silicone or of another suitable material and that are hollow for being slipped on flexible holders 14. It is thus possible to provide rolls of different diameters to ensure an optimal adjustment of the retractor and allow easy cleaning and sterilization. The end of holder 14 comprises a thickened portion 15 providing a secure retention of the roll.

As appears especially in FIG. 3, the mucosa pads and the lip shield are separated and spaced apart from each other perpendicularly to the plane of the connecting elements. The connecting elements are arranged approximately centrally between the respective mucosa pad, the mucous membrane and the lip shield. The distance between the point of support of the mucosa pad on the mucous membrane and the centerline M of the lip shield is D. This distance may range from 10 mm to 30 mm. The lips are thus lifted off from the teeth in such a manner that a free treatment of the teeth and of the gingival tissue is possible.

The lip shield is anatomically shaped and designed to accommodate different lip shapes, and it is furthermore curved in such a way that it is avoided that the lip is pressed outwards.

The cheek portion is of a flexible construction and includes a curved surface 16 connected to the connecting elements by a flexible web 17. The cheeks are thus retracted from the teeth and from the mucous membrane, and the curved, flexible surfaces provide a high comfort.

The horizontal distance between the cheek portions as well as their dimensions are chosen such that they do not obstruct the area of the mouth corners, and the flexible connecting elements enable the dentist to further spread the mouth corners if required for certain operations. When closing the mouth, the lip portions perform an essentially translational movement. On one hand, the flexible connecting elements assist the requirement of keeping the mouth open, whereby the retractor does not become uncomfortable even in prolonged sessions; but on the other hand, they allow working with the mouth closed.

The entire retractor, except the mucosa rolls, may be made in one piece. If the retractor is intended to be reused, synthetic materials available under the designations "PEEK" and "PPSU" have been found to be appropriate, or e.g. "PC" for single use.

Providing the lip portion with mucosa pads and designing the cheek portions as flexible surfaces results in an embodiment which offers a comfortable fit for the patient and allows an optimum treatment by the dentist.

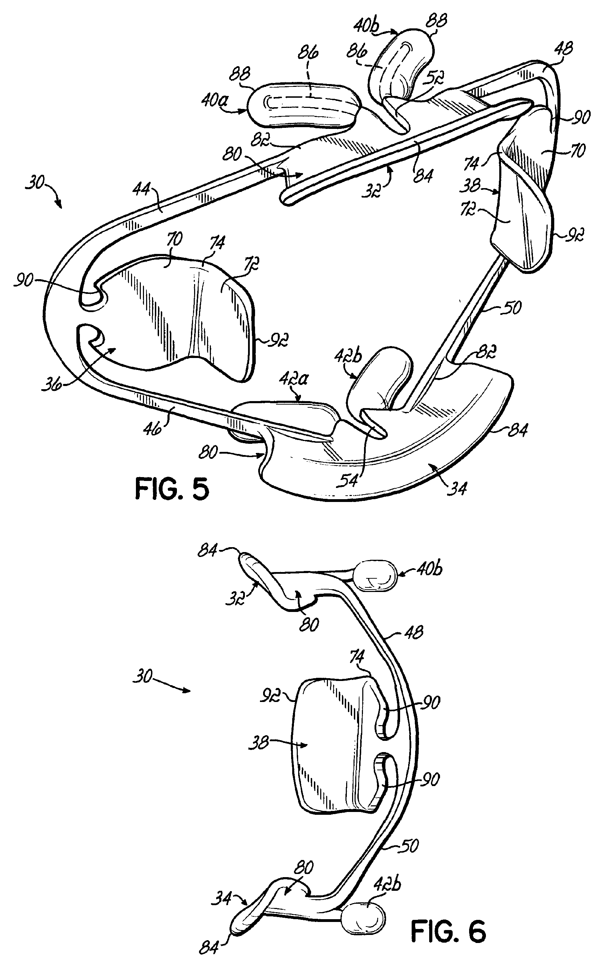

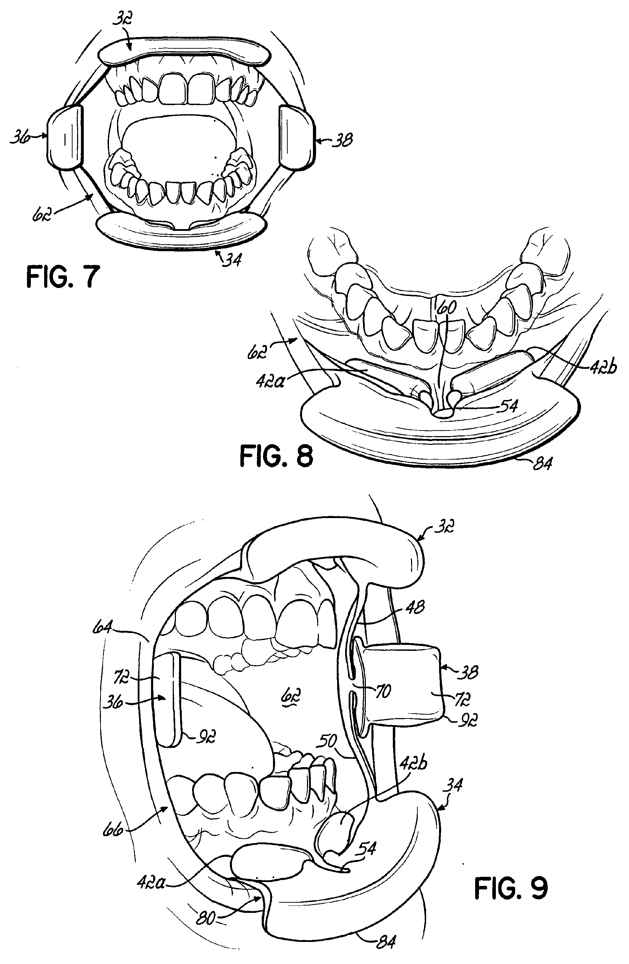

FIGS. 5 and 6 depict another embodiment of a cheek and lip retractor 30 which is similar in construction to the embodiment discussed above with respect to FIGS. 1-4. Accordingly, the retractor 30 includes upper and lower lip shields 32, 34, oppositely disposed cheek portions 36, 38, upper and lower mucosa pads 40a, 40b, 42a, 42b, and connecting elements 44, 46, 48, 50, similar to those described above. The retractor 30 of FIGS. 5 and 6 further includes apertures 52, 54 formed in the respective upper and lower lip shields 32, 34, generally between the mucosa pads 40a, 40b, 42a, 42b of each respective upper and lower lip shield 32, 34. The apertures 52, 54 provide increased comfort to patients by reducing or wholly eliminating pressure on the frenulum 60 when installed in a patient's mouth 62, as can be seen with reference to FIG. 8.

The cheek portions 36, 38 of the retractor 30 comprise first sections 70 that are similar to the cheek portions 7, 8 of the embodiment depicted in FIGS. 1-4, and second sections 72 extending from respective inwardly facing portions of the first sections 70. The second sections 72 are disposed at angles relative to the first sections 70. In the embodiment shown, the first and second sections 70, 72 of the cheek portions 36, 38 are generally planar in shape, and are connected by a generally arcuate intermediate section 74. At least the second section 72 of each cheek portion 36, 38 may be selectively frangible to permit practitioners to modify the size of the cheek portions 36, 38 for a particular patient or procedure. The second sections 72 are configured to extend outwardly of a patient's mouth 62, thereby providing a convenient location where a practitioner may grasp and squeeze the retractor 30 to facilitate inserting and removing the retractor 30 from a patient's mouth 62. The outwardly extending second sections 72 overlie the corner portions 64 of a patient's lips 66, as depicted in FIGS. 7 and 9, thereby protecting those areas from inadvertent contact during dental procedures.

The upper and lower lip shields 32, 34 are arcuate in shape, defining channels 80 with first and second oppositely disposed side edges 82, 84 for receiving the lips 66 of a patient therebetween. Each mucosa pad 40a, 40b, 42a, 42b comprises an elongate arm 86 cantilevered from a first side edge 82 of one of the upper and lower lip shields 32, 34, as described above for retractor 1 of FIGS. 1-4. The mucosa pads 40a, 40b, 42a, 42b further include rolls of material 88 removably disposed on each arm 86 to provide a comfortable fit against a patient's mucosa. The apertures 52, 54 between the mucosa pads 40a, 40b, 42a, 42b extend from the first side edges 82 of the lip shields 32, 34 in directions generally toward the second side edges 84. The flexible connecting elements 44, 46, 48, 50 of the retractor 30 extend between the lip shields 32, 34 and each of the cheek portions 36, 38, as illustrated in the figures.

The connecting elements 44, 46, 48, 50 extend from the first side edges 82 of the respective lip shields 32, 34, initially in directions parallel to the first side edges 82, toward first side edges 90 of the respective cheek portions 36, 38. There is no gap or space between the first side edges 82 of the lip shields 32, 34 and the connecting elements 44, 46, 48, 50, thereby avoiding the potential for pinching the lips of a patient therebetween. When installed in a patient's mouth 62, the first side edges 82 of the lip shields 32, 34, the first sections 70 of the cheek portions 36, 38, and the connecting elements 44, 46, 48, 50 are all disposed within the patient's mouth 62, while the second side edges 84 of the lip shields 32, 34 and the second side edges 92 of the cheek portions 36, 38 extend outwardly from the patient's mouth 62, as depicted in FIGS. 7 and 9.

While the present invention has been illustrated by the description of exemplary embodiments thereof, and while the embodiments have been described in considerable detail, additional advantages and modifications will readily appear to those skilled in the art.

## Claims

1. A dental cheek and lip retractor, comprising:
upper and lower lip shields, each said lip shield including first and second oppositely disposed side edges defining an arcuate channel therebetween for receiving the lip of a patient with said first side edge disposed within the patient's mouth and said second side edge disposed outside the patient's mouth;
first and second cheek portions disposed between said upper and lower lip shields and spaced laterally apart from one another and said lip shields;
a plurality of flexible, elongate connecting elements, each said connecting element extending between said first side edge of one of said lip shields and one of said cheek portions; and
first and second mucosa pads associated with each said lip shield, each said mucosa pad comprising an elongate arm cantilevered from said first side edge of said respective lip shield.

2. A dental cheek and lip retractor, comprising:
upper and lower lip shields, each said lip shield including first and second oppositely disposed side edges, each said lip shield shaped to engage a patient's mouth such that said first side edge is disposed within the patient's mouth and said second side edge is disposed outside the patient's mouth;
first and second cheek portions disposed between said upper and lower lip shields and spaced laterally apart from one another and said lip shields, each said cheek portion including first and second oppositely disposed side edges, each said cheek portion shaped to engage a patient's mouth such that said first side edge is disposed within the patient's mouth and said second side edge is disposed outside the patient's mouth; and
a plurality of flexible, elongate connecting elements, each said connecting element extending between said respective first side edges of one of said lip shields and one of said cheek portions such that said connecting elements are positioned to be disposed within the patient's mouth when the lip shields and cheek portions engage a patient's mouth.

3. The cheek and lip retractor of claim 2, wherein each of said upper and lower lip shields is shaped to define a channel between said first and second oppositely disposed side edges for receiving a respective upper and lower portion of a patient's lips, and wherein each of said first and second cheek portions is shaped to define a channel between said first and second oppositely disposed side edges for receiving a respective corner lip and cheek portion of a patient's mouth.

4. The cheek and lip retractor of either claim 2 or claim 3, further comprising:
first and second mucosa pads associated with each said lip shield, each said mucosa pad comprising an elongate arm cantilevered from said first side edge of said respective lip shield.

5. The cheek and lip retractor of either claim 1 or claim 4, further comprising a roll of material removably received on each said elongate arm.

6. The cheek and lip retractor of any one of claims 1, 4 or 5, further comprising an aperture in each said lip shield, said aperture disposed between said first and second mucosa pads and extending from said first side edge generally in a direction toward said second side edge.

7. The cheek and lip retractor of any one of claims 1, 4, 5 or 6, wherein said first and second mucosa pads each extend in directions outwardly from said first side edge and away from one another.

8. The cheek and lip retractor of any preceding claim, wherein each said connecting element extends initially in a direction parallel to said first side edge of said respective lip shield.

9. The cheek and lip retractor of any preceding claim, wherein at least part of each said cheek portion is selectively frangible to define a desired size of said cheek portion.

10. The cheek and lip retractor of any one of claims 1 to 8, wherein each said cheek portion comprises a first section and a second section disposed at an angle to said first section.

11. The cheek and lip retractor of claim 10, wherein at least one of said first and second sections is a planar section.

12. The cheek and lip retractor of either claim 10 or claim 11, wherein said first and second sections of said cheek portion are interconnected by an arcuate intermediate section.

13. The cheek and lip retractor of any one of claims 10 to 12, wherein at least said second section of said cheek portion is selectively frangible to define a desired size of said cheek portion.
